# FASCICULE DE BREVET EUROPEEN

(11) **EP 1 260 887 B1**
(45) Date de publication et mention de la délivrance du brevet: **24.05.2006**
(21) Numéro de dépôt: 02352011.7
(22) Date de dépôt: 25.03.2002
(51) Int. Cl.: G05B 19/042

(54) **Procédé de réalisation d'un coeur de commande-contrôle**
Verfahren zur Erzeugung eines Steuerung-Überwachungskernes
Method for creating a control-supervisor core

(30) Priorité: 26.03.2001 FR 0104017
(43) Date de publication de la demande: 27.11.2002
(73) Titulaire: M3 Systems, Saint Hilaire, 31410 Noe (FR)
(72) Inventeur: POLLINA, Marc, Saint Hilaire 31410-NOE (FR)
(74) Mandataire: Santarelli

(56) Documents cités:
- EP-A- 0 881 553
- EP-A- 0 899 670
- US-A- 5 612 866
- US-A- 5 920 479
- US-A- 5 933 356
- HAJJAR M N ET AL: "LES OBJETS, AVENIR DU CONTROLE DE PROCEDES" MESURES REGULATION AUTOMATISME, CFE. PARIS, FR, vol. 60, no. 682, 1 février 1996 (1996-02-01), pages 81-83, XP000556561 ISSN: 0755-219X

## Description

La présente invention concerne un procédé de réalisation d'un calculateur qui implémente des fonctions de commande-contrôle. Plus particulièrement, l'invention concerne un procédé de conception d'une partie du calculateur, celle permettant la réalisation de ces fonctions.

De tels calculateurs peuvent être utilisés à bord de véhicules automobiles, de satellites ou d'avions afin d'assurer le contrôle de divers organes ou équipements nécessaires au bon fonctionnement du véhicule ou par extension au déroulement de la mission assignée au système. De tels calculateurs peuvent aussi se trouver dans une installation industrielle ou domotique devant gérer les ressources d'un bâtiment ou d'un ensemble de bâtiments.

Ces calculateurs se caractérisent par le fait qu'il remplissent, entre autres, les fonctions suivantes : communication avec un autre calculateur local ou distant par l'intermédiaire d'un réseau, surveillance d'organes ou d'équipements dont il a la responsabilité, commande de ces organes en fonction d'ordres reçus par l'intermédiaire du réseau et en fonction de l'état du système et des anomalies détectées.

Le procédé proposé est basé sur le regroupement de l'ensemble de ces fonctions dans une entité appelée « coeur de commande-contrôle ». Ainsi le calculateur est découpé en trois couches: couche de communication et d'interface, coeur de commande-contrôle, application. La couche de communication et d'interface permet à la fois de gérer les interfaces avec les organes à contrôler et avec le réseau de communication. La couche application implémente des traitements spécifiques (tels par exemple dans un satellite le traitement des données scientifiques provenant d'un senseur). Entre ces deux couches, se trouve la couche contenant le coeur de commande-contrôle qui agit alors comme un « filtre intelligent » entre la couche d'interface et de communication et la couche application.

Le document EP-0 881 553 révèle un système de contrôle autonome pour un véhicule spatial. Ce système intègre une structure proche de celle décrite ci-dessus.

Le « coeur de commande-contrôle » apparaît comme une partie du calculateur pouvant être constituée de matériel ou de logiciel voire des deux selon les contraintes de réalisation du calculateur.

Le « coeur de commande-contrôle » échange, via la couche d'interface et de communication, des paquets de données avec un utilisateur distant. Ces paquets permettent à l'utilisateur de faire parvenir des commandes ou de recevoir des informations sur l'état du système géré par le « coeur de commande-contrôle ». Ils permettent aussi de modifier les paramètres internes du « coeur de commande-contrôle » comme par exemple la liste des surveillances ou les seuils de déclenchement des alarmes.

Le « coeur de commande-contrôle » a aussi pour fonction de générer des actuations/acquisitions auprès des équipements pilotés par le calculateur dans lequel il est intégré. Il commande alors les modes opérationnels de ces organes et assure l'acquisition de paramètres de surveillance.

Afin de détecter les anomalies de fonctionnement (paramètre hors limite, dépassement de délai, ...) et de commander des actions de sauvegarde correspondantes, le coeur de commande-contrôle surveille l'application ainsi que les équipements dont il a la charge. En cas d'anomalie, des messages sont envoyés par l'intermédiaire de la couche d'interface et de communication vers l'utilisateur afin de lui permettre de décider des actions nécessaires

L'idée d'un calculateur tel que décrit ci-dessus comportant un coeur de commande-contrôle trouve son origine dans les développements de calculateurs embarqués à bord de satellites. Par exemple un satellite d'observation de la Terre en orbite basse met en oeuvre une architecture informatique dans laquelle chaque charge utile (radar altimètre, radar imageur, enregistreur, etc...) est gérée de façon autonome par un calculateur dédié.

Toutefois, les domaines d'application de tels calculateurs ne sont pas limités au spatial. Dans le domaine automobile, un tel calculateur peut trouver une application notamment dans la commande de divers équipements connectés par un bus multi-plexé (par exemple de type CAN). On pourrait également utiliser un tel calculateur dans le domaine aéronautique, dans des process industriels et aussi dans des dispositifs domestiques tels ceux intégrés dans des systèmes domotiques.

Pour implémenter les fonctions remplies par un coeur de commande-contrôle, il faut actuellement, pour chaque nouvelle application, retravailler manuellement les diverses applications déjà existantes et modifier les logiciels correspondants. L'ensemble doit alors être recompilé et validé pour obtenir un logiciel opérationnel.

La présente invention a alors pour but de fournir un procédé permettant d'automatiser la réalisation d'un coeur de commande-contrôle, que celui-ci soit implémenté sous forme logicielle ou sous forme matérielle. Elle permettra avantageusement de réduire les temps de développement et de certification d'une nouvelle application. De préférence, cette réalisation d'un coeur de commande-contrôle se fera avec un haut degré d'autonomie et de sécurité.

A cet effet, elle propose un procédé de réalisation d'un coeur de commande-contrôle pour un calculateur embarqué dans un dispositif destiné à exécuter des fonctions à partir de commandes d'un utilisateur ou en fonction de paramètres mesurés par exemple par des capteurs.

Selon l'invention, ce procédé comporte les étapes suivantes :
- entrée de données spécifiques au dispositif recevant le calculateur, pour créer une base de données caractérisant les fonctions à exécuter par le dispositif,
- choix dans une bibliothèque de briques de base paramétrées, chaque brique étant formée par un logiciel préalablement écrit de telle manière qu'il puisse s'interconnecter avec d'autres briques,
- assemblage des briques selon un principe architectural prédéfini,
- compilation de l'ensemble obtenu afin de produire un code source.

Grâce à l'utilisation de briques de base paramétrées, il devient possible d'automatiser la procédure de réalisation d'un coeur de commande contrôle. Il suffit de prévoir une fois pour toutes des briques paramétrées qui peuvent se combiner les unes avec les autres pour n'avoir par la suite qu'à choisir les briques nécessaires et les combiner.

Le paramétrage des briques de base écrites par exemple sous forme de modules logiciels en langage C++ consiste par exemple à définir le contenu des données d'interface de ces modules.

Ce procédé présente l'avantage de pouvoir être automatisé et mis en oeuvre avec des ordinateurs mais il peut bien entendu également aussi être mis en oeuvre manuellement. Même mis en oeuvre manuellement, ce procédé permettrait de faciliter la tâche des programmateurs qui jusqu'à présent programment pour chaque nouvelle application un nouveau logiciel. Ils utilisent certes des programmes déjà existant ou des morceaux de ces programmes mais ils doivent les adapter à chaque fois et reprendre l'ensemble du programme du début à la fin pour s'assurer de la cohérence de l'ensemble ainsi réalisé.

Avantageusement, le procédé de réalisation selon l'invention comporte en outre l'étape suivante :
- à partir du code source obtenu, à l'aide d'un logiciel de conception assistée par ordinateur, réalisation d'un plan d'un circuit intégré pour une application spécifique (ASIC) implémentant tout ou partie des fonctions du coeur de commande-contrôle. Dans ce cas les briques de base écrites dans le langage C++ seront par exemple converties en langage VHDL.

Dans ce cas, un circuit intégré peut être réalisé à partir du plan obtenu après synthèse du code VHDL obtenu.

Pour garantir une bonne réalisation du procédé selon l'invention, après l'entrée des données, la cohérence et la complétude de l'ensemble de celles-ci sont de préférence validées.

Pour tester le produit issu du procédé de réalisation selon l'invention dès les premières étapes de sa mise en oeuvre, un scénario d'utilisation du coeur de commande contrôle est avantageusement créé et le comportement du code source obtenu après configuration et assemblage des briques de base peut être simulé.

Les caractéristiques et avantages de l'invention ressortiront d'ailleurs de la description qui va suivre, à titre d'exemple, en référence au dessin schématique annexé sur lequel :
La figure 1 est une vue schématique d'un calculateur intégrant un coeur de commande-contrôle,
La figure 2 est une vue schématique d'ensemble d'un procédé selon l'invention,
La figure 3 représente schématiquement une architecture d'un coeur de commande-contrôle.

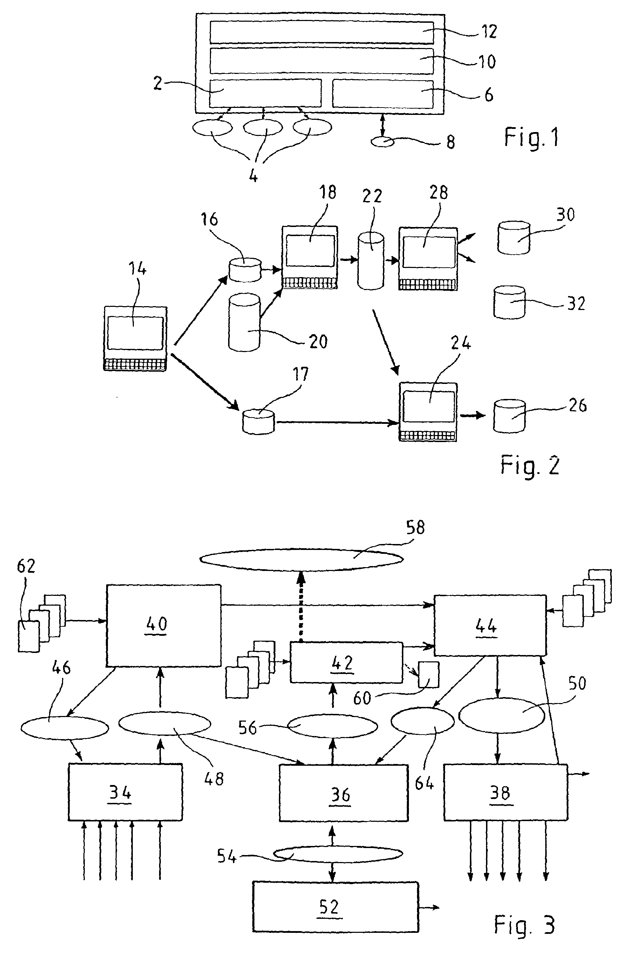

La figure 1 représente schématiquement un calculateur organisé en couches. Comme on peut le voir sur cette figure, ce calculateur comporte trois couches. La première couche est une couche d'interface et de communication qui permet à la fois de gérer les interfaces locales d'actuation/acquisition et de communiquer avec un utilisateur distant. Cette première couche comporte tout d'abord un interface actuaction/acquisition 2 qui permet au calculateur de communiquer et d'interagir avec des équipements 4. Cette couche d'interface et de communication comporte également un interface de communication 6 permettant au calculateur de communiquer avec l'utilisateur 8 par l'intermédiaire d'un réseau.

La seconde couche constitue le coeur de commande-contrôle 10 du calculateur. Ce dernier agit comme un filtre intelligent permettant de séparer les applications des événements externes non pertinents (gestion du système de communication, gestion des actuations/acquisitions, configuration par l'utilisateur du coeur de commande-contrôle,...).

Enfin, la troisième couche, appelée couche application 12, implémente des traitements spécifiques, par exemple traitements de données image, etc....

Cette architecture du calculateur permet d'isoler les fonctions de commande-contrôle qui ne dépendent ni du type d'application ni des interfaces de communication. Les fonctions de commande-contrôle gèrent les événements externes au calculateur (actuation, acquisition, message de l'utilisateur, etc...) et assurent la cohérence logique et temporelle de ces événements. Le coeur de commande-contrôle 10 peut ainsi se définir comme un système d'exploitation qui gère les ressources externes au calculateur alors qu'un système d'exploitation informatique classique gère la ressource interne du calculateur constitué par le processeur.

Le coeur de commande-contrôle 10 utilise des ressources spécifiques de traitement et de mémorisation. Son couplage avec la couche application 12 est très faible et se limite autant que possible à une zone mémoire partagée et bien délimitée lors de la conception du calculateur.

Une telle architecture de calculateur a été développée pour permettre d'augmenter la modularité des applications exécutées par le calculateur, d'augmenter la tolérance aux pannes et d'éviter la propagation d'erreurs vers la couche application 12. Le coeur de commande-contrôle 10 permet l'échange des informations avec l'utilisateur 8. Ainsi, l'utilisateur peut envoyer des demandes opérationnelles et recevoir des informations sur l'état du système. Le coeur de commande-contrôle décode également les commandes qui lui sont destinées. Ces commandes ainsi interprétées permettent la génération de séquences d'actuation/acquisition auprès des équipements 4 ainsi que la modification éventuelle de paramètres opérationnels de la fonction de commande-contrôle elle-même. Enfin, le coeur de commande-contrôle 10 surveille les équipements 4 afin de détecter des anomalies de fonctionnement (paramètre hors limite, durée dépassée, ...) et de commander des actions de sauvegarde en cas de problèmes. Un message d'anomalies peut être envoyer à l'utilisateur 8 afin de permettre la reconfiguration du système après détection d'une anomalie.

Le procédé selon l'invention permet de générer un code source qui implémente les fonctions du coeur de commande-contrôle 10 et ce procédé permet également de réaliser tout ou partie du coeur de commande-contrôle sous forme matérielle. La figure 2 illustre schématiquement les différentes étapes d'une variante de réalisation d'un procédé selon l'invention. Sur cette figure est notamment représenté un ensemble d'outils informatiques pouvant être mis en oeuvre pour la réalisation de cette variante de réalisation du procédé selon l'invention.

Un premier ordinateur 14, muni d'un logiciel correspondant, permet l'acquisition de données nécessaires à la définition et la configuration des fonctions du coeur de commande-contrôle 10. Cet ordinateur 14 construit une base de données 16 qui caractérise complètement l'application de commande-contrôle que l'on veut développer.

Cet ordinateur 14 permet par ailleurs de vérifier la cohérence et la complétude des besoins exprimés par un concepteur communiquant avec cet ordinateur 14.

En outre, ce premier ordinateur 14 permet d'acquérir un ensemble de scenarii fonctionnels 17 utilisés par la suite pour effectuer des validations par simulation.

Un second ordinateur 18 est destiné à la gestion des paramètres de configuration. Il travaille à partir de la base de données 16 générée par le premier ordinateur 14 ainsi qu'à partir d'une bibliothèque 20 dans laquelle se trouvent des briques de base disponibles. En fonction des données collectées dans la base de données 16 et des briques disponibles dans la bibliothèque 20, l'ordinateur 18 configure chaque brique de base nécessaire pour réaliser le programme du coeur de commande-contrôle 10 et assemble toutes les briques de base ainsi paramétrées pour former l'architecture du coeur de commande-contrôle 10. Une fois toutes les briques de base paramétrées et assemblées, le second ordinateur 18 génère un code source 22.

Ce code source 22 est utilisé avec les scenarii fonctionnels 17 par un troisième ordinateur 24, ou ordinateur de simulation. Cet outil informatique permet d'évaluer dès les phases initiales d'un projet l'utilisation des ressources du calculateur du point de vue de la commande-contrôle, c'est-à-dire communication, mémorisation, traitement, etc.... Cet ordinateur de simulation 24 permet également de valider des scenarii de mission prenant en compte les comportements des protocoles de communication et les mécanismes de commande-contrôle.

En sortie de cet ordinateur de simulation 24, des références de test 26 fonctionnelles entrant dans le processus de certification finale du système utilisant le coeur de commande-contrôle 10 sont obtenues.

Le code source 22 est également compilé pour donner un logiciel. Un ordinateur 28 de compilation est alors prévu à cet effet. On obtient alors un logiciel 30. Le code source 22 peut également être traité par l'ordinateur de compilation 28 pour obtenir les plans d'un microprocesseur 32 remplissant les mêmes fonctions que le logiciel 30.

Pour produire le logiciel qui implémentera le coeur de commande-contrôle 10 ou pour réaliser l'ASIC remplissant tout ou partie de ces fonctions, un concepteur doit tout d'abord entrer des données propres à l'application souhaitée. L'interface avec le concepteur se fait par l'intermédiaire de formulaires génériques préparés à l'avance qui permettent l'acquisition de données de commande-contrôle. Ces formulaires défilent donc sur l'écran du premier ordinateur 14 et le concepteur remplit ces formulaires à l'aide du clavier de cet ordinateur.

Le tableau ci-après donne un exemple de différents paramètres qui devront être fournis par un concepteur dans le cas où le calculateur est destiné à équiper une charge utile d'observation de la terre.

| **Nature des paramètres** | **Exemple de structures de données** |
|---|---|
| Liste des modes opérationnels du sous-système géré par le coeur de commande contrôle | enum **modes** {standby, standbyoff, warmup0, warmup1on, warmup1off, warmup2on, warmup2off, pause,biteon, ..... ...., nbmodes}; |
| Liste des durées min et max de chaque transition entre les modes et Liste des durées min/max de chaque mode | const time delaytransition[nbmodes][nbmodes] = {{nc, 10, 50, 20, 300, ....}, {30, 30, 200,..... |
| Matrice des transitions de mode autorisées et liste des commandes permettant d'effectuer ces transitions | const modes transitionmode[nbmodes][nbra] = { standby, warmup0, standby, warmup1off, warmup2on, warmup2off, standby, standby, standby, biteon, standby, },... |
| Liste des commandes équipement et des acquisitions de télémétries entre chaque transition de mode. | enum sequences { nul, seq1, seq2, seq3, seq4, seq5, seq6, seq7, seq8, seq9, seq10, seq11, seq12, seq13, |
| Liste des macro-commandes pouvant être interprétées par le coeur de commande-contrôle. | enum **statusmacro** {go_standby, go_warmup0, go_warmup1on, go_warmup1off, ....) |
| Liste des acquisitions élémentaires (télémétries) | enum telemetries { icutemp, icuvoltage, temp1, temp2, mwssvoltagepluscinq, mwssvoltagemoinscinq,usovoltage, spsavoltagepluscinq, spsavoltagemoinscinq, |
| Matrice de l'état des équipements dans chaque mode (ON/OFF) et seuils de surveillance (min/max) des acquisitions élémentaires pour chaque mode | const minvalue [nbmodes][nbtelemeties] = { {nc, 10, 50, 20, 300, ....}, |
| Liste des actuations élémentaires (commandes) | enum Isccommands { usoaboff, usoaon, osobon, mwssabonoff, mwssaon, mwssbon, spsaaboff, spsaaon, spsabon, Ivpsaover, Ivpsaen, Ivpsbover, Ivpsben, |

Une fois tous les paramètres définis par le concepteur dans le premier ordinateur 14, celui-ci les stocke dans la base de données 16.

La bibliothèque 20 comporte un certain nombre de briques de base pouvant s'interconnecter selon un principe architectural prédéfini par des structures des tables génériques qui sont configurées en fonction du contenu de la base de données 16. Les briques présentes dans la bibliothèque doivent permettre de couvrir l'ensemble des besoins qui peuvent se présenter, ou tout du moins la plus grande partie de ces besoins.

Les briques de base sont pré-développées dans un langage informatique de type C++ ou VHDL. L'abréviation VHDL est utilisée pour désigner un Very High Speed Integrated Circuit (VHSIC) Hardware Description Language. Il s'agit donc d'un langage informatique permettant de décrire un circuit intégré numérique.

Les briques de base sont écrites de manière paramétrée et aussi de manière à pouvoir venir se raccorder à d'autres briques pour former un ensemble cohérent.

Selon les briques de base disponibles dans la bibliothèque 20 et les données fournies par le concepteur et répertoriées dans la base de données 16, le second ordinateur 18 permet de choisir dans la bibliothèque les briques de base qui seront nécessaires à la réalisation du coeur de commande-contrôle 10. Ces briques sont complétées pour les adapter aux données présentes dans la base de données 16 et sont assemblées.

Ce second ordinateur 18 permet également de vérifier la faisabilité d'une implémentation. La gestion des paramètres de configuration se fait au sens large puisque l'ordinateur 18 gère aussi bien la configuration opérationnelle relative à la mission décrite par le concepteur que la configuration des briques de base (configuration des produits logiciels/matériels, et que la configuration de l'architecture obtenue c'est-à-dire l'architecture du coeur de commande-contrôle 10).

Tout changement survenu dans l'une de ces configurations doit pouvoir être géré et retracé. De plus, il faut pouvoir vérifier que les règles d'assemblage des briques de base sont respectées et que la configuration du coeur de commande-contrôle demandée par le programmateur est possible avec les briques de bases disponibles dans la bibliothèque 20.

Le code source 22 obtenu en sortie du second ordinateur 18 est un modèle comportemental du coeur de commande-contrôle 10 qui sert de base à la réalisation de ce coeur de commande-contrôle. Ce code source est par exemple également rédigé en langage informatique C++.

A partir de ce code source 22, l'ordinateur de compilation 28 réalise l'interface avec des outils de conception micro-électroniques ou des outils de conception de logiciels.

Ainsi, dans le premier cas, le code source 22 permet de réaliser un ASIC (pour Application-Specific Integrated Circuit ou circuit intégré pour une application spécifique). Pour cela, on utilise par exemple des logiciels de conception assistée par ordinateur pour la réalisation d'un circuit intégré spécifique à une application. De tels logiciels sont connus de l'homme du métier. Ils permettent de réaliser les plans d'un microprocesseur puis celui-ci peut être réalisé à l'aide de ces plans. On retrouve alors dans l'ASIC final les codes source des briques de base utilisés avec leur configuration spécifique.

Dans le second cas, le code source 22 est compilé pour obtenir un logiciel.

Selon le domaine de mise en oeuvre, l'application de commande-contrôle sera implémentée sous forme purement logiciel, purement matérielle ou bien sous forme mixte c'est-à-dire en partie matérielle et en partie logicielle. Le partage matériel/logiciel dépend du domaine d'application et des contraintes d'implémentation. Dans certains cas, la plate-forme matérielle est imposée et il s'agit donc de produire du logiciel uniquement. Dans d'autres cas, il est adéquat de développer tout ou partie du matériel sous forme d'une puce complexe. Dans ce dernier cas, le coeur de commande-contrôle 10 est un sous-ensemble de cette puce complexe.

La figure 3 montre un exemple d'architecture de coeur de commande-contrôle 10. Cet exemple peut par exemple être adapté à un coeur de commande-contrôle embarqué dans une charge utile de satellite. Cette figure montre le flux de données dans le coeur de commande-contrôle 10.

Le coeur de commande-contrôle tel que représenté a six fonctions réparties en deux catégories :
- des fonctions de gestion des interfaces externes : acquisition cyclique des paramètres à surveiller (bloc 34), acquisition des macrocommandes provenant de l'utilisateur (bloc 36) et exécution des actuations vers les équipements (bloc 38)
- des fonctions de haut niveau : surveillance du sytème et analyse des anomalies (bloc 40), interprétation des commandes utilisateur (bloc 42) et prise de décision pour la génération d'actuations (bloc 44).

La communication entre les six fonctions génériques du coeur de commande-contrôle 10 se fait par l'intermédiaire d'une base de données système.

La fonction "gestion des acquisitions" 34 doit assurer l'acquisition cyclique d'une liste de paramètres accessibles par l'interface avec les équipements 4. Des paramètres possibles sont par exemple : mesure d'une valeur analogique (température, courant, tension, ...), état d'un relais (ouvert/fermé, valeur numérique, etc...). Les acquisitions sont faites à partir des adresses de paramètres 46 qui est une liste des adresses à parcourir pour obtenir les mesures nécessaires au bon fonctionnement du coeur de commande-contrôle 10. Cette fonction "gestion des acquisitions" génère une table des acquisitions 48 dans laquelle pour chaque adresse sont indiquées les valeurs mesurées. Cette table des acquisitions 48 est datée. L'acquisition des différentes mesures est faite de façon cyclique. Ce cycle peut être variable et compris par exemple entre 125 ms et 16 secondes dans le cas d'une charge utile satellite. Les mesures doivent être cohérentes dans le temps et la liste des acquisitions est faite en rafale en début de cycle.

Les actuations sont des événements élémentaires qui donnent lieu à l'activation d'une interface vers les équipements 4 pour commander un élément externe tel par exemple un relais. La gestion des actuations assure l'exécution séquentielle des actuations à partir d'une table prédéfinie : c'est la table des actuations 50. Chaque entrée de la table 50 correspond à un événement sur les interfaces. La fonction "gestion des actuations" 38 exécute pas à pas les événements inscrits dans la table des actuations. Le début d'exécution de la table 50 peut se faire à une heure de bord prédéfinie. Une table d'actuation contient par exemple un nombre maximum d'événements égal à 30. Un chronomètre est associé à la durée totale d'exécution de la table et en cas de dépassement d'un temps prédéterminé un message d'erreur est généré. Pour l'acquisition des commandes provenant de l'utilisateur (36), il est prévu d'utiliser un interface de communication 52. On suppose que l'interface de communication se fait par l'échange de paquets de données. On retrouve alors au niveau du bloc 36 les fonctions suivantes : dé-formatage des paquets reçus, formatage des paquets envoyés, génération d'une requête d'émission de paquets, et gestion de la queue d'attente des paquets. Les paquets de commande reçus de l'utilisateur 8 contiennent un champ qui correspond à la date d'exécution. Cette date est soit immédiate (dès réception) soit égale à une heure différée. Dans le cas d'une heure différée, le paquet est inséré dans une queue et sera activé à la date d'échéance. Un tampon de stockage 54 est prévu entre le bloc fonction 36 et l'interface de communication 52.

Le bloc 42 d'interprétation de macro-commandes reçoit des paquets de données 56 par l'intermédiaire de la couche de communication. Ces données correspondent à des commandes générées par l'utilisateur 8. Ces commandes sont de trois types différents et correspondent à trois traitements différents :
- changement de mode : cette commande est éxécutée par le coeur de commande-contrôle et il lui correspond à l'activation de la table d'actuation correspondante,
- changement de paramètre du coeur commande-contrôle ou activation/désactivation de fonction, et
- données 58 à destination de la couche application 12.

On trouve donc en sortie du bloc 42 soit une demande d'activation d'une table d'actuation adressée alors au bloc 44, soit des paramètres mis à jour 60, soit un paquet de données 58 à destination de la couche application 12.

La fonction de surveillance représentée schématiquement par le bloc 40 permet la génération d'alarmes. A partir des mesures 48 fournies par la gestion des acquisitions 34 la fonction de surveillance compare chaque mesure par rapport à des seuils (minimum et maximum) ou à des valeurs attendues. S'il y a un dépassement de seuil ou une anomalie, une alarme est générée.

Le système surveillé se trouve soit dans un mode opérationnel, soit en transition entre deux modes opérationnels soit encore en état d'anomalies. La détection d'anomalies se fait en comparant l'état dans lequel devrait être le système avec l'état dans lequel il est. Un processus de filtrage, par exemple par prise de plusieurs mesures, doit permettre de ne pas déclencher d'alarmes intempestivement, par exemple déclencher une alarme suite à une mesure anormale (bruit). Les données entrant dans le bloc 40 proviennent des tables des acquisitions 48 générées par le bloc 34 et aussi d'une base de données 62 regroupant les seuils (mini/maxi) et les valeurs attendues. Les alarmes générées par ce bloc 40 de surveillance sont dirigées vers le bloc 44 de décision.

Le bloc 44 représentant la fonction de décision reçoit, comme indiqué ci-dessus, des messages de la fonction interprétation 42 et de la fonction surveillance 40.

La logique de décision est par exemple celle résumée dans la table ci-dessus :

| Etat surveillance | Etat interprétation | Action prise |
|---|---|---|
| Inchangé | Inchangé | Aucune |
| Alarme | Inchangé | Active la table de reconfiguration correspondant au mode actuel et à l'alarme |
| Alarme | Exécution paquet | Refuse l'exécution paquet (mcmd refuse mode) et active la table de reconfiguration correspondant au mode actuel et à l'alarme |
| Inchangé | Exécution paquet | Active la table de changement de mode correspondant à la macro-commande contenue dans le paquet |

En sortie, la fonction décision génère une table d'événements 50 et produit un historique 64 des décisions pour en informer l'utilisateur 8.

Le procédé ci-dessus permet de générer de façon automatique des coeurs de commande-contrôle sous forme logiciel ou matérielle. Ainsi, ce procédé permet un gain de temps très sensible par rapport à l'élaboration manuelle d'un code source puis sa compilation pour obtenir un coeur de commande-contrôle.

L'originalité à la base du procédé selon l'invention consiste en fait à concentrer l'offre sur une fonction générique : la commande contrôle, et à traiter sa conception de façon automatique dans toutes les phases du cycle de vie du système, alors qu'aujourd'hui les outils sont spécialisés sur une technologie (logiciel, matériel, ...) ou sur une phase du cycle de vie (conception du système, conception de l'équipement, conception de la carte, ...).

La rationalisation du processus de conception et de développement du coeur de commande-contrôle permet de réduire notablement les coûts de développement, d'intégration et de validation d'un nouveau système. Les fonctions remplies par le coeur de commande-contrôle apparaissent dans de nombreuses applications embarquées, non seulement dans le domaine spatial, mais aussi dans le domaine automobile, domotique, les process industriels, ....

Le procédé selon l'invention fournit au concepteur d'application de commande-contrôle un environnement de développement prédéfini correspondant à son domaine d'application et permettant de générer automatiquement les fonctions de commande-contrôle. La démarche à suivre par le concepteur est tout à fait différente de celle qui est la sienne lorsqu'il développe manuellement les fonctions de commande-contrôle. Il lui suffit ici de renseigner avec soin des tableaux prédéfinis pour exprimer ses besoins et il obtient par la suite un code source qu'il peut mettre en oeuvre industriellement.

Bien entendu, la présente invention ne se limite pas aux formes de réalisation décrites et représentées, mais englobe toute variante d'exécution et/ou combinaison de leurs divers éléments, dans le cadre des revendications ci-après.

Un exemple non limitatif de coeur de commande-contrôle et de briques de base en langage C++ est donné ci-après.

### 1.1 Brique de base « acquisition »

### 1.1.1 Fonctions

Le module « acquisition » a pour fonctions :
➢ de récupérer et de mémoriser les données de mesure provenant des capteurs d'entrée,
➢ de surveiller le comportement des mesures et de déclencher en cas d'erreur (dépassement de seuil) un changement de mode au niveau du module Macro.

### 1.1.2 Interfaces du module "acquisition" :

Les interfaces du module acquisition sont les suivantes :
➢ CLOCK
➢ DATE
➢ MODEGEN(out): sortie de déclenchement d'un changement de mode
➢ TELEM(in) : entrées provenant des capteurs externes (télémétries)

La déclaration des interfaces du module acquisition en C++ est la suivante :

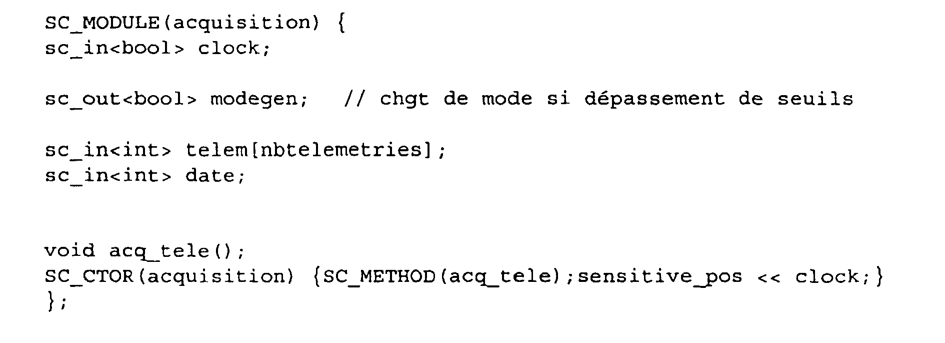

### 1.1.3 Algorithme du module "acquisition"

Pour chaque télémétrie :
➢ effectuer l'acquisition (mémorisation de la valeur en entrée) selon le taux requis et si l'entrée est validée.
➢ tester selon la catégorie d'entrée:
   - la validité des états possibles de la valeurs lue
   - le dépassement d'un seuil
   - l'appartenance à un domaine de valeurs
   - le dépassement d'un double seuil avec changement de mode pour le second seuil
➢ comptabiliser les dépassements de seuil pour mémorisation dans l'historique au-delà d'une certaine valeur avec incrément du compteur d'anomalies.
➢ retourner à la normale après dépassement de seuil mémorise dans l'historique.
➢ mémoriser la valeur lue et des min et max des valeurs précédentes et de leur date.
➢ stocker au taux voulu la valeur dans un tableau si mémorisation d'une série de valeurs, avec mémorisation de la date de début.

### 1.2Module « macro »

### 1.2.1 Fonctions

Le module « macro » analyse et gère les macro-commandes formatées en provenance de la couche de communication. Chaque macro-commande est analysée (vérification de l'entête) puis exécutée le moment venu.

Le traitement d'une macro-commande conduit selon le type de macro-commande soit à un changement de mode, soit à la configuration d'éléments du système comme par exemple les seuils des télémétries. Un changement de mode conduit a l'exécution d'une séquence de microcommandes.

### 1.2.2 Interface du module "macro"

Les interfaces du module « macro » sont les suivantes :
➢ CLOCK
➢ DATE
➢ RESET : reset du buffer de macro lors d'une nouvelle macro prioritaire (signal interne!)
➢ REDDEFA(out) : définition de la redondance entre instruments A et B
➢ SEQ(out) : séquence de microcommandes a exécuter
➢ STARTSEQ(out) : déclenche une séquence de microcommandes
➢ USERCMD(out) : 1 microcommande à exécuter
➢ STARTCMD(out) : déclenche 1 microcommande
➢ MODEGEN(in) : déclenchement d'un changement de mode
➢ BUFMACRO(in) : 1 macro-commande à exécuter
➢ LOADMACRO(in) : ordre d'exécution d'une nouvelle macro-commande

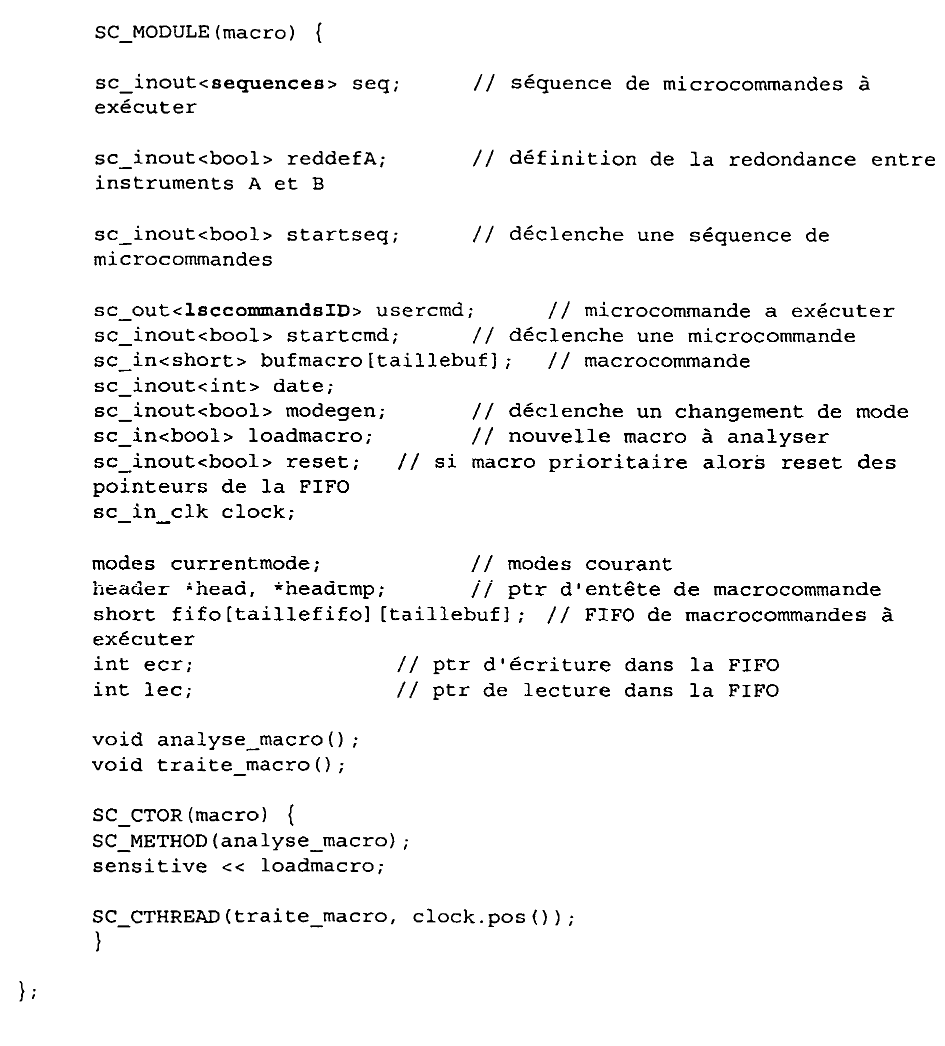

### 1.2.3 Algorithmes du module "macro"

### Fonction analyse_macro:

déclenchée par LOADMACRO.
tester les champs de l'entête.
incrément du compteur d'anomalies en cas d'erreur.
insérer la nouvelle macro dans la FIFO et faire progresser ses pointeurs.
détermination de la catégorie de la macro en fonction de son identificateur dans son entête.
reset si conflit entre macro en cours et nouvelle macro.

### Fonction traite_macro:

si demande de changement de mode ou de switchdown alors passage en mode standby.
parcours de la FIFO a la recherche de la prochaine macro a exécuter (en fonction de sa date d'exécution).
si macro trouvée, l'indiquer dans l'historique, la retirer de la FIFO et l'exécuter.
selon l'identificateur de l'entête de la macro, exécuter:
   - set monitoring : définition des paramètres des entrées à scruter
   - inhibit/enable monitoring : validation/invalidation de la scrutation
   - switch-down enable/inhibit
   - reset history
   - complément de redondance entre A et B
   - direct command : microcommande directe
   - time-code (resynchronisation) : mise a jour de DATE
   - enable non-nominal telemetries : définition du taux de stockage des échantillons
   - inhibit non-nominal telemetries
   - event macrocommands : changement de mode
génération d'un changement de mode si la durée de transition ou de mode est non conforme déclenchement de la séquence de microcommandes correspondant a cette nouvelle transition et attente de sa fin d'exécution. changement effectif de mode et mise a jour de l'historique.

### 1.3 Module « actuation »

### 1.3.1 Fonctions

Le module actuation se charge uniquement d'exécuter les séquences de microcommandes pilotant les sorties (commandes externes). Ces séquences sont fournies par le module macro, soit lors d'un changement de mode soit du fait de l'analyse du macrocommande.

Ce module est chargé de générer des pulses sur les sorties en fonction de microcommandes dont la séquence dépend du mode de fonctionnement du système. Ce module déroule une séquence et pour chaque microcommande et pilote les sorties correspondantes.

### 1.3.2 Interface du module "actuation"

CLOCK
SEQ(in) // séquence de microcommandes à exécuter
USERCMD(in) // 1 microcommande à exécuter
REDDEFA(in) // définition de la redondance entre instruments A et B
STARTSEQ(in) // déclenche une séquence de microcommandes
STARTCMD(in) // déclenche 1 microcommande
SOUT(out) // tableau de signaux de commande externes

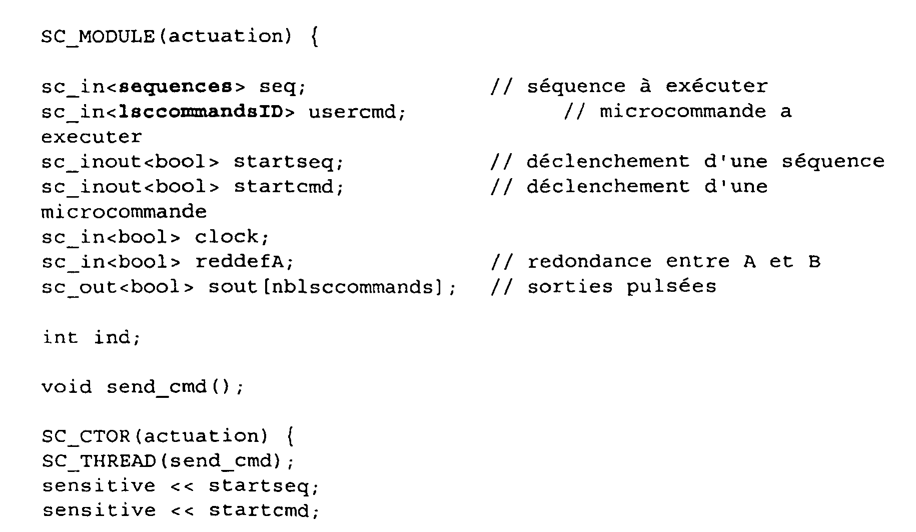

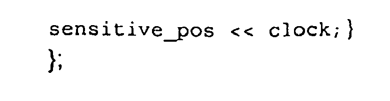

### 1.3.3 Algorithme du module "actuation"

### Fonction send_cmd

➢ si ordre d'exécution d'une séquence (STARTSEQ) alors parcours de la séquence et exécution de chaque microcommande en générant un créneau de durée liée à la sortie activée.
➢ si ordre d'exécution d'une seule microcommande (STARTCMD) alors génération du créneau sur la sortie voulue.

### Structure de données

La structure des données utilisée dans le coeur de commande-contrôle regroupe l'ensemble des données devant être fournies par l'utilisateur.

La configuration des briques de base formant le coeur de commande-contrôle consiste simplement à expliciter les données contenues dans cette. Le logiciel de configuration doit simplement traduire les entrées utilisateur en des structures de données compatibles correspondant à la syntaxe décrite dans les paragraphes ci-dessous :
➢ Liste des modes
➢ Liste des macrocommandes
➢ Liste des transitions entre modes
➢ Durée des transitions entre modes
➢ Catégories de macro
➢ Long Switch closure commands
➢ Telemetries
➢ Séquences de micro-commandes
➢ Types d'entrées dans l'historique
➢ Constantes

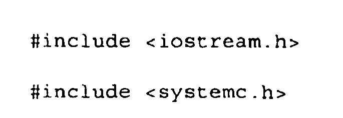

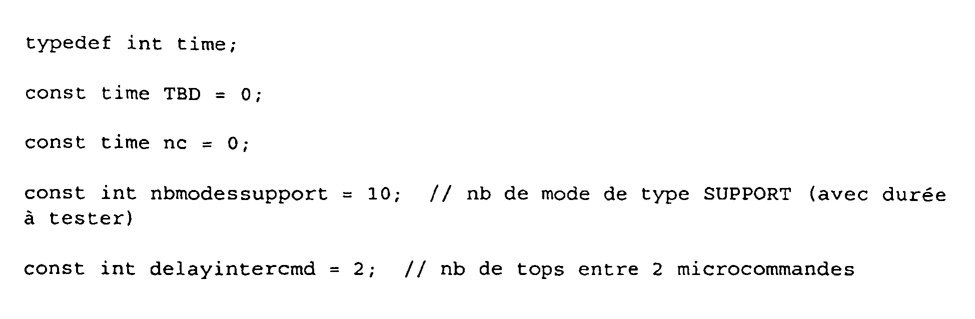

### 1.4Liste des modes

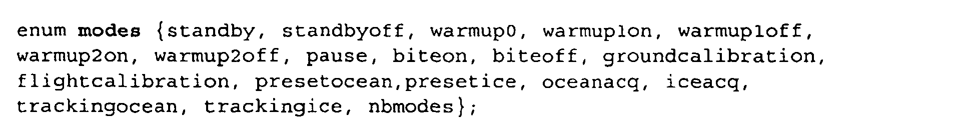

### 1.5Liste des macrocommandes

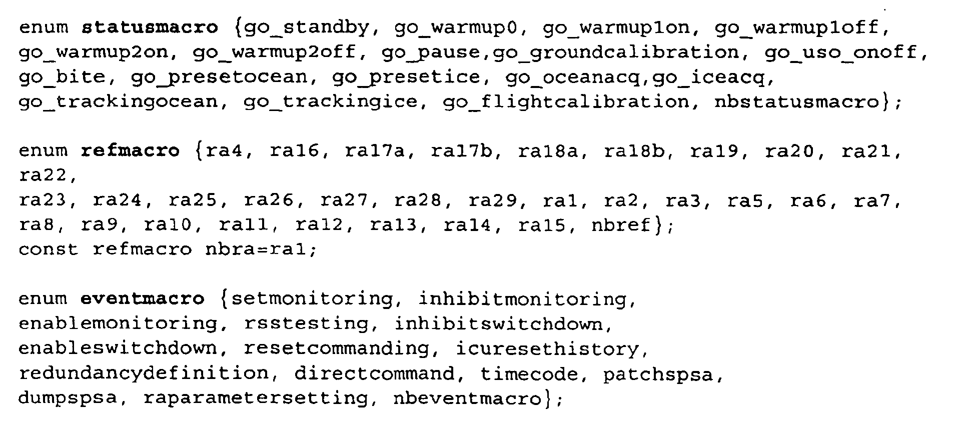

### 1.6 Liste des transitions entre modes

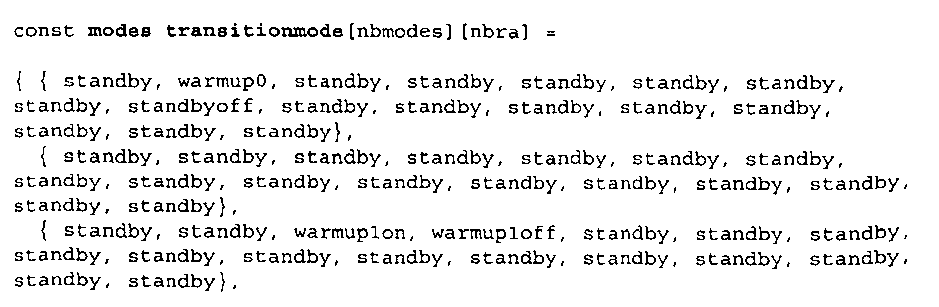

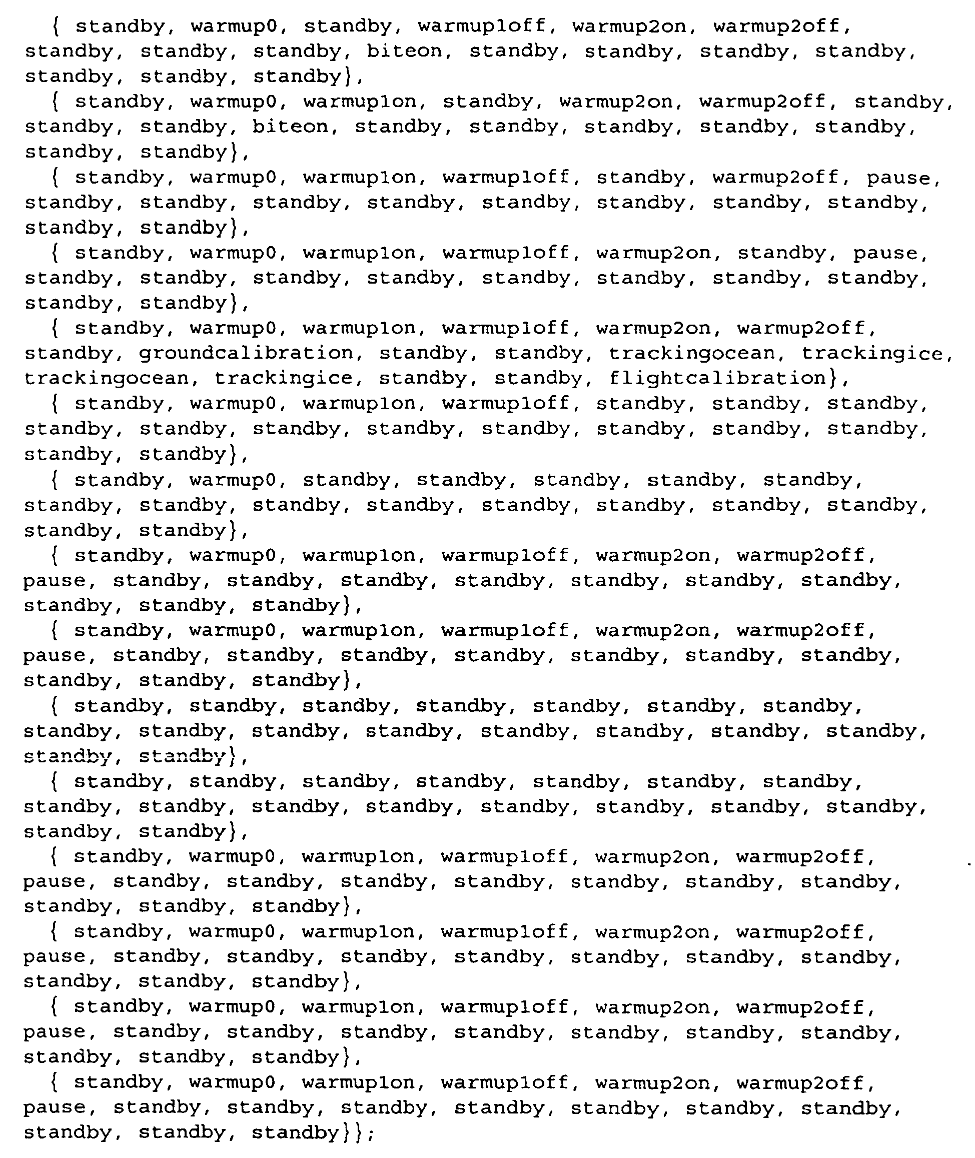

### 1.7Durées des transitions entre modes

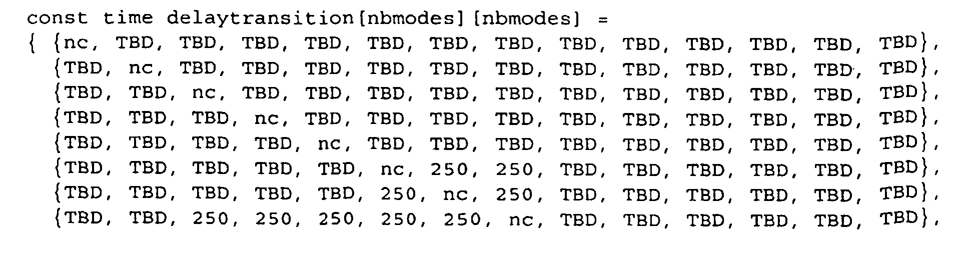

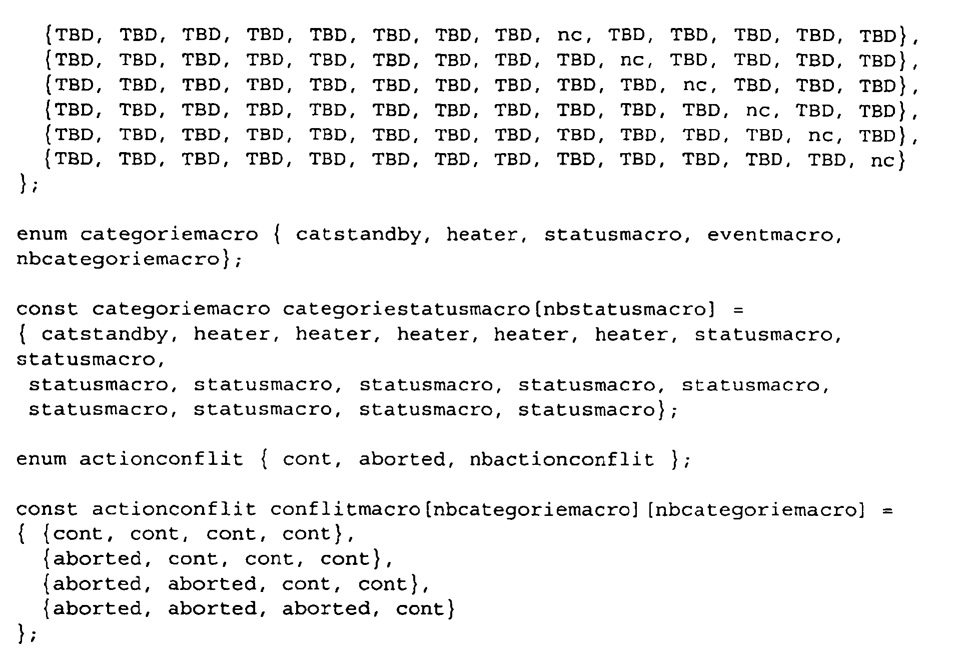

### 1.8Long Switch Closure Commands

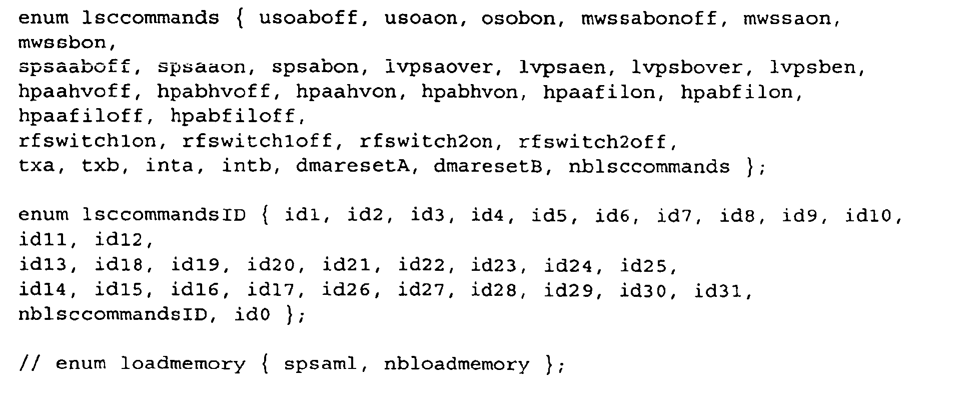

### 1.9Telemetries

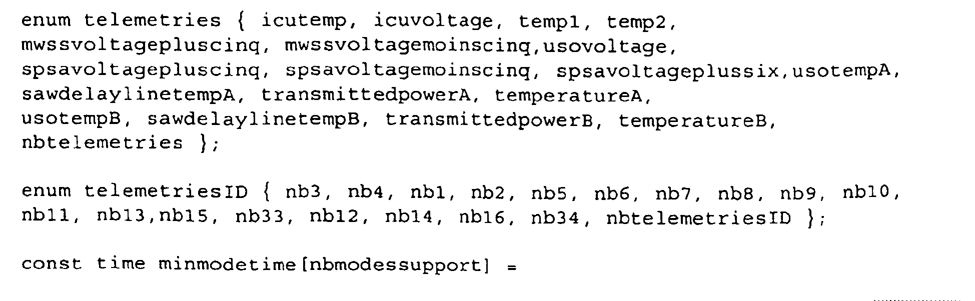

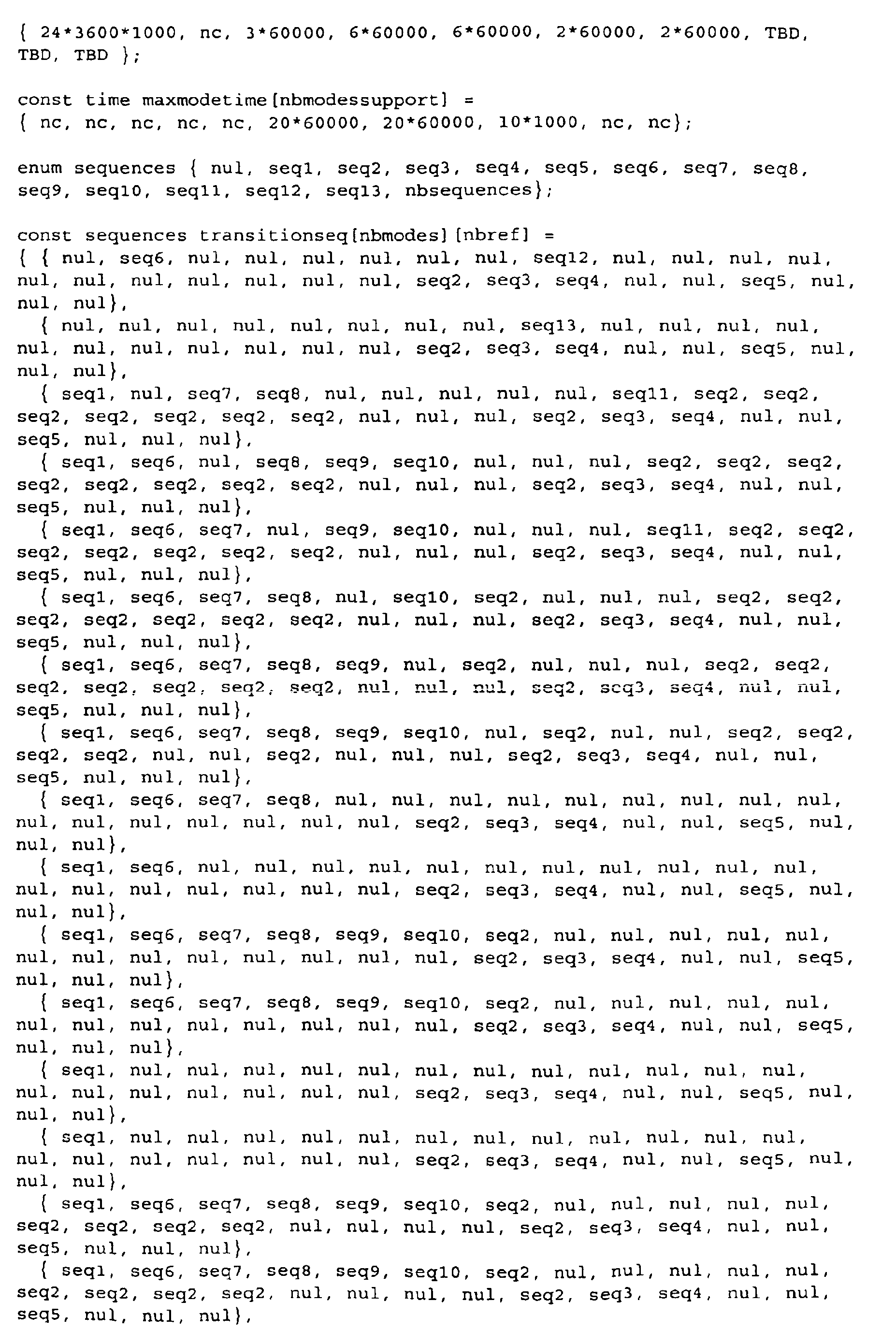

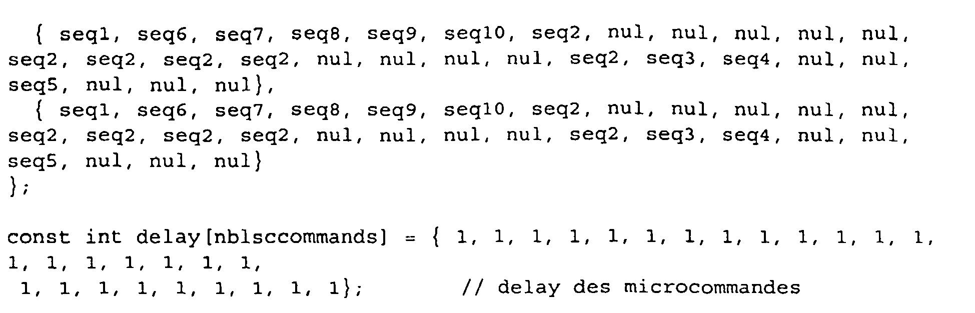

### 1.10 Séquences de micro-commandes

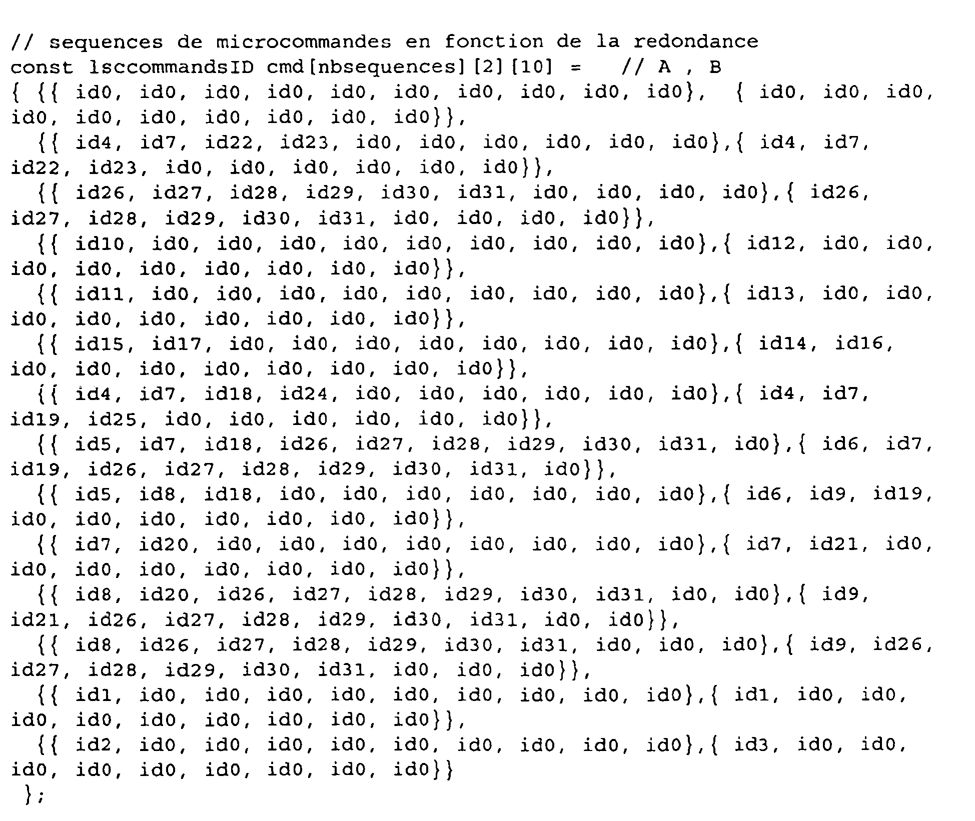

### 1.11 Constantes

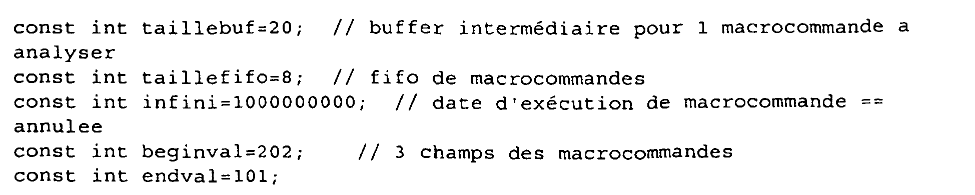

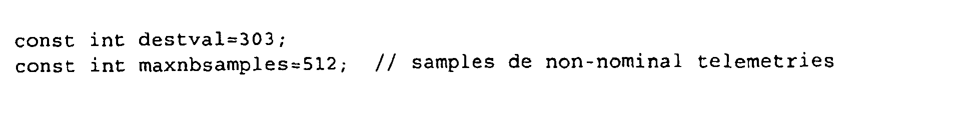

## Revendications

1. Procédé de réalisation d'un coeur de commande-contrôle (10) d'un calculateur d'un dispositif destiné à exécuter des fonctions à partir de commandes ou de paramètres mesurés et embarqué à bord d'un véhicule terrestre ou spatial, le coeur de commande-contrôle (10) comportant d'une part des modules gérant des interfaces externes (2, 6) avec un module d'acquisition de paramètres à surveiller (34), un module d'acquisition de commandes (36) en provenance d'un utilisateur et un module d'exécution d'actuations (38) pour des équipements (4) et d'autre part des modules de haut niveau avec un module de surveillance et d'analyse d'anomalies (40), un module d'interprétation des commandes (42) reçues de l'utilisateur (8) et un module de prise de décision (44) pour la génération d'actuatlons, **caractérisé en ce qu'**il comporte les étapes suivantes :
- entrée de données spécifiques au dispositif recevant le calculateur, pour créer une base de données (16) caractérisant les fonctions à exécuter par le dispositif,
- en fonction des données de la base de données (16), choix dans une bibliothèque (20) de briques de base paramétrées, chaque brique étant formée par un logiciel préalablement écrit de telle manière qu'il puisse s'interconnecter avec d'autres briques, et configuration des briques en fonctions des données de la base de données (16),
- assemblage des briques selon un principe architectural prédéfini,
- compilation de l'ensemble obtenu afin de produire un code source (22).

2. Procédé de réalisation selon la revendication 1, **caractérisé en ce qu'**il comporte en outre l'étape suivante :
- à partir du code source (22) obtenu, à l'aide d'un logiciel de conception assistée par ordinateur, réalisation d'un plan d'un circuit intégré pour une application spécifique (ASIC) implémentant tout ou partie des fonctions du coeur de commande-contrôle.

3. Procédé de réalisation selon la revendication 2, **caractérisé en ce qu'**un circuit intégré est réalisé à partir du plan obtenu.

4. Procédé de réalisation selon l'une des revendications 1 à 3, **caractérisé en ce qu'**après l'entrée des données, la cohérence et la complétude de l'ensemble de celles-ci sont validées.

5. Procédé de réalisation selon l'une des revendications 1 à 4, **caractérisé en ce que** les briques de base sont sous forme VHDL.

6. Procédé de réalisation selon l'une des revendications 1 à 5, **caractérisé en ce qu'**un scénario d'utilisation (17) du coeur de commande-contrôle (10) est créé et **en ce que** le comportement d'un code source obtenu après configuration et assemblage des briques est simulé.

## Claims

1. Method of producing a command and control core (10) of a computer in a device intended to execute functions from commands or parameters measured and installed on-board a land or space vehicle, the command and control core (10) comprising on the one hand modules managing external interfaces (2, 6) with a module for acquiring parameters to be monitored (34), a module (36) for acquiring commands coming from a user and a module (38) for executing actuations for equipment (4) and on the other hand high-level modules with a module (40) monitoring and analysing abnormalities, a module (42) for interpreting the commands received by the user (8) and a decision-taking module (44) for generating actuations, **characterised in that** it comprises the following steps:
- inputting data specific to the device receiving the computer, in order to create a database (16) characterising the functions to be executed by the device,
- according to the data in the database (16), choosing from a library (20) of parameterised basic bricks, each brick being formed by software previously written so that it can interconnect with other bricks, and configuring the bricks according to the data in the database (16).
- assembling the bricks according to a predefined architectural principle.
- compiling the assembly obtained in order to produce a source code (22).

2. Production method according to claim 1, **characterised in that** it also comprises the following step:
- from the source code (22) obtained, using computer aided design software, producing a plan of an integrated circuit for a specific application (ASIC) implementing all or some of the functions of the command and control core.

3. Production method according to claim 2, **characterised in that** an integrated circuit is produced from the plan obtained.

4. Production method according to one of claims 1 to 3, **characterised in that**, after the data entry, the coherence and the completeness of the whole of these are validated.

5. Production method according to one of claims 1 to 4, **characterised in that** the basic bricks are in VHDL form.

6. Production method according to one of claims 1 to 5, **characterised in that** a scenario (17) for use of the command and control core (10) is created and **in that** the behaviour of a source code obtained after configuration and assembly of the bricks is simulated.

## Patentansprüche

1. Verfahren zur Bildung eines Steuer- und Kontrollkerns (10) eines Rechners einer Vorrichtung, die dazu bestimmt ist, Funktionen auf der Basis von Befehlen oder Messparametern auszuführen und die an Bord eines Land- oder Raumfahrzeugs aufgenommen wird, wobei der Steuer- und Kontrollkern (10) umfasst: einerseits Module, die externe Schnittstellen (2, 6) mit einem Modul zur Erfassung von zu überwachenden Parametern (34) steuern, ein Modul zur Erfassung von Befehlen (36), die von einem Benutzer stammen, und ein Modul zur Ausführung von Betätigungen (38) für Einrichtungen (4) und andererseits Module von übergeordnetem Niveau mit einem Modul zur Überwachung und Analyse von Anomalien (40), einem Modul zur Interpretation der vom Benutzer (8) erhaltenen Befehle (42) und ein Modul zum Treffen von Entscheidungen (44) für die Erzeugung von Betätigungen, **dadurch gekennzeichnet, dass** es die folgenden Schritte umfasst:
- Eingabe von Daten, die spezifisch für die Vorrichtung sind, die den Rechner aufnimmt, um eine Datenbank (16) zu schaffen, die die von der Vorrichtung auszuführenden Funktionen charakterisiert,
- in Abhängigkeit von den Daten der Datenbank (16) Auswahl von parametrierten Basisbausteinen in einer Bibliothek (20), wobei jeder Baustein durch ein Softwareprogramm gebildet wird, das im Vorhinein derart geschrieben wurde, dass es sich mit anderen Bausteinen zusammenschalten kann, und Konfiguration der Bausteine in Abhängigkeit von den Daten der Datenbank (16),
- Verbinden der Bausteine nach einem vordefinierten Architekturprinzip,
- Kompilieren der erzielten Gesamtheit, um einen Quellcode (22) zu erzeugen.

2. Bildungsverfahren nach Anspruch 1, **dadurch gekennzeichnet, dass** es darüber hinaus folgenden Schritt umfasst:
- auf der Basis des erzielten Quellcodes (22) und mit Hilfe eines Softwareprogramms zum computerunterstützten Entwurf Herstellung eines Plans für eine anwendungsspezifische Schaltung (ASIC), die alle oder einen Teil der Funktionen des Steuer- und Kontrollkerns implementiert.

3. Bildungsverfahren nach Anspruch 2, **dadurch gekennzeichnet, dass** eine integrierte Schaltung auf der Basis des erzielten Plans hergestellt wird.

4. Bildungsverfahren nach einem der Ansprüche 1 bis 3, **dadurch gekennzeichnet, dass** nach der Eingabe der Daten die Widerspruchsfreiheit und die Vollständigkeit aller dieser Daten bestätigt wird.

5. Bildungsverfahren nach einem der Ansprüche 1 bis 4, **dadurch gekennzeichnet, dass** die Basisbausteine in der Form VHDL vorliegen.

6. Bildungsverfahren nach einem der Ansprüche 1 bis 5, **dadurch gekennzeichnet, dass** ein Verwendungsszenario (17) des Steuer- und Kontrollkerns (10) geschaffen wird und dass das Verhalten eines nach der Konfiguration und dem Zusammenfügen der Bausteine erzielten Quellcodes simuliert wird.
